# EUROPEAN PATENT APPLICATION

(11) **EP 4 840 770 A1**
(43) Date of publication of application: **18.11.2026**
(21) Application number: 25748825.4
(22) Date of filing: 30.01.2025
(51) Int. Cl.: B65B 3/04, B25J 13/00

(54) **BEVERAGE MANUFACTURING SYSTEM, CONTROL DEVICE, CONTROL PROGRAM, AND BEVERAGE MANUFACTURING METHOD**

(30) Priority: 02.02.2024 JP 2024015159; 11.12.2024 JP 2024216937
(71) Applicant: Asahi Group Holdings, Ltd., Tokyo 130-8602 (JP); Asahi Breweries, Ltd., Tokyo 130-8602 (JP)
(72) Inventor: KAMIYAMA, Naoya, Moriya-shi, Ibaraki 302-0106 (JP); UENO, Shota, Moriya-shi, Ibaraki 302-0106 (JP); ARATANI, Kiyoshi, Moriya-shi, Ibaraki 302-0106 (JP); NAKANO, Hiroyuki, Moriya-shi, Ibaraki 302-0106 (JP); YAMAGUCHI, Toru, Yamaguchi-City, Yamaguchi 7530303 (JP); NAGAMINE, Yasuhiko, Yamaguchi-City, Yamaguchi 7530303 (JP); MATSUDA, Isamu, Yamaguchi-City, Yamaguchi 7530303 (JP); UENO, Takuma, Fukuoka City, Fukuoka 810-0074 (JP); UEDA, Hidehiko, Fukuoka City, Fukuoka 810-0074 (JP); SHIMA, Akihiro, Fukuoka City, Fukuoka 810-0074 (JP); TOMII, Yuichiro, Fukuoka City, Fukuoka 810-0074 (JP)
(74) Representative: Hoffmann Eitle
(86) International application number: PCT/JP2025/003053
(87) International publication number: WO 2025/164735

(57) **Abstract**

A beverage production system includes: a first line that conveys an empty can having an opening; a second line that conveys a produce item having a projected area smaller than an area of the opening of the empty can; a parallel link robot; and a control device that controls the parallel link robot such that the parallel link robot holds the produce item conveyed on the second line one unit at a time and loads the held produce item into the opening of the empty can conveyed on the first line.

## Description

### Technical Field

The present disclosure relates to a beverage production system, a control device, a control program, and a beverage production method.

### Background Art

For example, Patent Literature 1 (Japanese Patent Application Laid-Open (JP-A) No. 2023-172534) describes a container-packed beverage including a carbonated beverage and dried fruit. The carbon dioxide content of the carbonated beverage included in the container-packed beverage is set to a gas volume such that the dried fruit is immersed in the carbonated beverage when the container is in a sealed state, and the immersed dried fruit floats upward toward a liquid surface of the carbonated beverage when the container is opened.

### SUMMARY OF INVENTION

### Technical Problem

In the container-packed beverage described in Patent Literature 1, dried fruit needs to be manually packed into a container or the like, and mass production is difficult. A technique for gripping produce items with a robot arm and transporting the produce items to another line is known. However, with this type of technique, non-uniform solid objects such as produce items gripped by the robot arm cannot be accurately loaded into empty containers conveyed at high speed.

The disclosure has been made in view of the above points, and an object of the disclosure is to provide a beverage production system, a control device, a control program, and a beverage production method that can hold conveyed non-uniform solid objects one unit at a time and accurately load the conveyed non-uniform solid objects into conveyed empty containers.

### Solution to Problem

A beverage production system according to an aspect of the disclosure includes: a first line that conveys an empty container having an opening; a second line that conveys a solid object having a projected area smaller than an area of the opening; a loading device configured to hold the solid object conveyed on the second line one unit at a time and configured to load the held solid object into the empty container through the opening; and a control device that controls the loading device such that the solid object conveyed on the second line is loaded into the empty container conveyed on the first line.

According to this aspect, conveyed non-uniform solid objects can be held one unit at a time and accurately loaded into conveyed empty containers.

The first line and the second line may run side by side in the same direction.

According to this aspect, a holding operation and a loading operation of the solid object can be efficiently performed.

The loading device may include a holder that detachably holds the solid object, and the control device may control the loading device such that the solid object is loaded into the opening of the empty container while the holder holding the solid object is moved above the opening of the empty container and the holder is moved in the same direction as a conveyance direction of the empty container.

According to this aspect, the solid object can be accurately loaded into the empty container.

The control device may control the loading device such that the solid object is loaded into the opening of the empty container while a movement speed of the holder holding the solid object is synchronized with a conveyance speed of the empty container and the holder is moved in advance of the empty container to a downstream side in the conveyance direction.

According to this aspect, the solid object can be loaded into the empty container more accurately.

The control device may select, as a solid object to be held, a solid object whose form satisfies a predetermined quality criterion among a plurality of the solid objects, from a captured image obtained by capturing the plurality of solid objects conveyed on the second line.

According to this aspect, a solid object satisfying the predetermined quality criterion can be selected.

The predetermined quality criterion may include an index value representing a degree of circularity, and the control device may select, from the captured image, a solid object for which the index value satisfies a certain condition.

According to this aspect, a solid object for which the index value representing a degree of circularity satisfies a certain criterion can be selected.

The predetermined quality criterion may include an index value representing a degree of circularity and a color area representing an area of a color of a specific portion, and the control device may identify, from the captured image, a plurality of solid objects for which the index value satisfies a certain condition, and may select, from the identified plurality of solid objects, a solid object for which the color area is equal to or greater than a threshold.

According to this aspect, a solid object for which the index value representing a degree of circularity and the color area satisfy a certain criterion can be selected.

The loading device may include a holder that detachably holds the solid object, and the control device may select the number of solid objects greater than the number of the holders and control the loading device such that, when the loading device fails to hold or load one selected solid object, another selected solid object is held.

According to this aspect, even when holding or loading of one solid object fails, another solid object can be held.

The holder may be a vacuum suction gripper.

According to this aspect, the solid object can be held without damaging the solid object.

The gripper may be a Bernoulli gripper.

According to this aspect, the solid object can be accurately held without damaging the solid object.

The solid object may be formed in a sliced shape.

According to this aspect, the solid object formed in a sliced shape can be loaded into the empty container.

The solid object may be a produce item.

According to this aspect, the produce item can be loaded into the empty container.

The solid object may be a wood chip.

According to this aspect, the wood chip can be loaded into the empty container.

A control device according to an aspect of the disclosure is the control device of a beverage production system including a first line that conveys an empty container having an opening, a second line that conveys a solid object having a projected area smaller than an area of the opening, a loading device configured to hold the solid object conveyed on the second line one unit at a time and configured to perform an operation of loading the held solid object into the empty container through the opening, and a control device that controls operation of the loading device, the control device controlling the loading device such that the solid object conveyed on the second line is loaded into the empty container conveyed on the first line.

A control program according to an aspect of the disclosure is a control program for a beverage production system including a first line that conveys an empty container having an opening, a second line that conveys a solid object having a projected area smaller than an area of the opening, a loading device configured to hold the solid object conveyed on the second line one unit at a time and configured to perform an operation of loading the held solid object into the empty container through the opening, and a control device that controls operation of the loading device, the control program causing a computer to execute control of the loading device such that the solid object conveyed on the second line is loaded into the empty container conveyed on the first line.

A beverage production method according to an aspect of the disclosure is a beverage production method using a beverage production system including a first line that conveys an empty container having an opening, a second line that conveys a solid object having a projected area smaller than an area of the opening, a loading device configured to hold the solid object conveyed on the second line one unit at a time and configured to perform an operation of loading the held solid object into the empty container through the opening, and a control device that controls operation of the loading device, the beverage production method including controlling the loading device such that the solid object conveyed on the second line is loaded into the empty container conveyed on the first line.

Water activity of the solid object may be 0.80 or lower.

According to this aspect, growth of microorganisms attributable to the solid object can be suppressed.

### Advantageous Effects of Invention

According to the disclosure, conveyed non-uniform solid objects can be held one unit at a time and accurately loaded into conveyed empty containers.

### BRIEF DESCRIPTION OF DRAWINGS

Fig. 1 is a diagram illustrating an example of a configuration of a beverage production system according to a first embodiment.
Fig. 2 is a block diagram illustrating an example of a hardware configuration of a control device and a parallel link robot according to the first embodiment.
Fig. 3 is a block diagram illustrating an example of a functional configuration of the control device according to the first embodiment.
Fig. 4 is a diagram for explaining a holding operation and a loading operation of a produce item according to the first embodiment.
Fig. 5Ais a diagram illustrating an example of a captured image from which circularity of a produce item has been derived.
Fig. 5B is a diagram illustrating an example of a captured image from which circularity and a color area of a produce item have been derived.
Fig. 6 is a top view schematically illustrating a state in which a robot loads a produce item into an opening of an empty can.
Fig. 7 is a side view schematically illustrating a state in which a robot loads a produce item into an opening of an empty can.
Fig. 8 is a side view illustrating a state in which a movement speed of a robot holding a produce item is synchronized with a conveyance speed of an empty can.
Fig. 9 is a flowchart illustrating an example of a flow of processing by a control program according to the first embodiment.
Fig. 10 is a block diagram illustrating an example of a hardware configuration of a parallel link robot according to a second embodiment.
Fig. 11 is a diagram for explaining a holding operation and a loading operation of plural produce items according to the second embodiment.
Fig. 12 is a diagram illustrating an example of a captured image from which circularity and a color area of a produce item have been derived.
Fig. 13 is a flowchart illustrating an example of a flow of processing by a control program according to the second embodiment.

### DESCRIPTION OF EMBODIMENTS

Below, examples of embodiments for implementing a technology of the disclosure will be described in detail with reference to the drawings. In addition, the same reference signs are assigned throughout the drawings to constituent elements and processes having operations, actions, and functions that perform similar roles, and duplicate description may be omitted as appropriate. Each drawing is merely schematically illustrated to an extent that enables sufficient understanding of the technology of the disclosure. Accordingly, the technology of the disclosure is not limited only to the illustrated examples. In the embodiments, description of configurations not directly related to the technology of the disclosure and well-known configurations may be omitted.

### [First Embodiment]

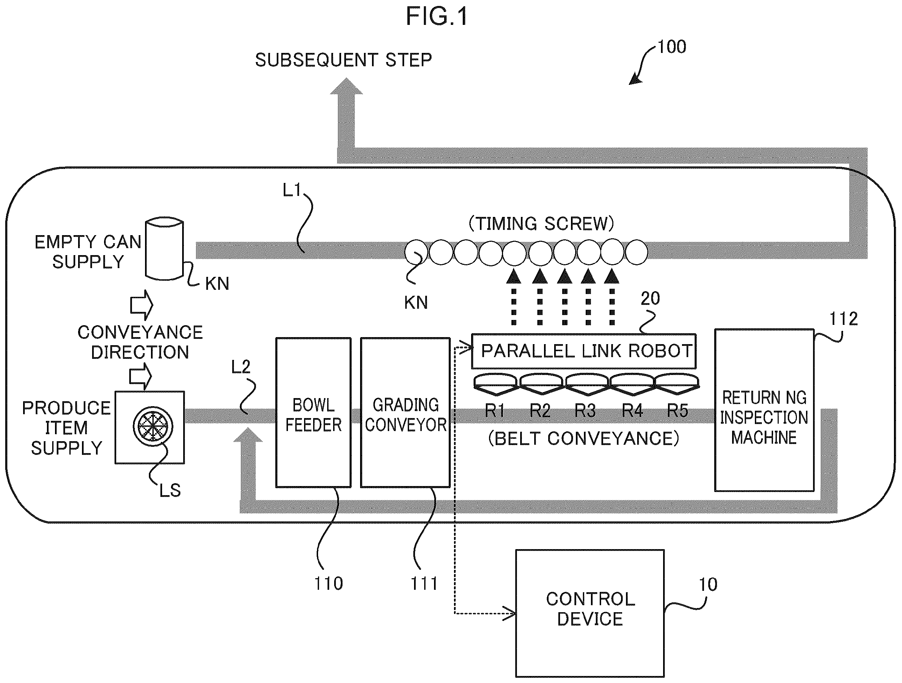

Fig. 1 is a diagram illustrating an example of a configuration of a beverage production system 100 according to the first embodiment. A beverage according to the embodiment may be an alcoholic beverage or a non-alcoholic beverage. The beverage may be a beverage produced through a fermentation step, or may be a beverage produced without a fermentation step. In a case in which the beverage to be produced is an alcoholic beverage, an alcohol content (volume concentration of ethanol) and an extract concentration are not particularly limited, and may be appropriately determined in accordance with desired product quality.

As shown in Fig. 1, the beverage production system 100 according to the embodiment includes a first line L1, a second line L2, a control device 10, and a parallel link robot 20. The parallel link robot 20 according to the embodiment is an example of a loading device. The loading device is not limited to the parallel link robot 20, and may be, for example, another type of robot, a drone, or the like.

The parallel link robot 20 is a type of industrial robot employing a "parallel link mechanism" in which a final output point is operated by controlling plural mechanisms (parts) in parallel. The parallel link mechanism mainly includes motors and bearings and has a simple structure as compared with a conventional articulated robot. The parallel link robot 20 has, for example, robots R1 to R5, and the robots R1 to R5 are controlled in parallel.

The control device 10 is a controller communicably connected to the parallel link robot 20 and controlling an operation of the parallel link robot 20. A general-purpose computer device such as a personal computer (PC) is applied to the control device 10, for example. The control device 10 may be provided outside the parallel link robot 20, or may be integrally provided in the parallel link robot 20.

The first line L1 is a line that conveys an empty can KN. The empty can KN has an opening through which a produce item LS to be described later can be loaded. The empty can KN is an example of an empty container, but the empty container is not limited to a can. Examples of the empty container include a two-piece beverage can, a three-piece beverage can, a bottle can, a flexible container, and a glass bottle. Examples of the flexible container include a container obtained by forming a flexible resin such as polyethylene (PE), polypropylene (PP), ethylene-vinyl alcohol copolymer (EVOH), and polyethylene terephthalate (PET) into a bottle shape or the like. The flexible container may be made of a single-layer resin, or may be made of a multilayer resin. A downstream end of the first line L1 is connected to a subsequent step. The empty can KN processed on the first line L1 undergoes another process in the subsequent step.

The second line L2 is a line that conveys a produce item LS. The second line L2 runs, for example, side by side with the first line L1 in the same direction. Here, "the same direction" may be parallel, or may be non-parallel. In a case in which the directions are non-parallel, for example, a traveling direction of the second line L2 is inclined at 90 degrees or less with respect to a traveling direction of the first line L1. A bowl feeder 110, a grading conveyor 111, and a return NG inspection machine 112 are provided on the second line L2. The produce item LS is an example of a solid object, but the solid object is not limited to a produce item. A proj ected area of the produce item LS is smaller than an area of the opening of the empty can KN. "Projected area" means an area of a shadow projected onto a plane including the opening when light projected perpendicularly toward the opening strikes the produce item LS. The produce item LS is, for example, dried fruit. A type of fruit used as a raw material for the dried fruit is not particularly limited, and can be appropriately selected and used from, for example, fruit generally used in beverages, such as citrus fruit including lemon, lime, and orange, and apple, blueberry, Japanese apricot (including pickled Japanese apricot), peach, strawberry, pineapple, grape, mango, fig, apricot, pear, banana, and kiwi. The dried fruit may be one kind, or may be two or more kinds. In a case in which the produce item LS is a citrus fruit, the produce item LS may include albedo (a cotton-like or fibrous white portion on an inner side of a peel of the citrus fruit) and an outer peel, or the albedo and the outer peel may be removed. A shape of the produce item LS is not particularly limited, and may be, for example, a sliced shape, or may be another shape. Although a projected area of the produce item LS loaded into the empty can KN needs to be smaller than an area of the opening of the empty can KN, all projected areas of the produce items LS conveyed on the second line L2 need not be small. As described below, the produce item LS loaded into the empty can KN is selected in advance, and therefore produce items LS of various sizes may be conveyed on the second line L2.

In a case in which dried fruit is sliced as the produce item LS, a thickness before drying may be, for example, from 1.0 mm to 8.0 mm, or may be from 2.0 mm to 6.0 mm. For convenience, the thickness may be a thickness at a time when the dried fruit is added to the beverage. In this case, a thickness of the dried fruit may be, for example, from 0.5 mm to 5.0 mm, or may be from 1.0 mm to 3.0 mm. Further, the dried fruit in the beverage may have a thickness of from 1.0 mm to 8.0 mm, or may have a thickness of from 2.0 mm to 6.0 mm, as a result of the beverage being infiltrated into the dried fruit. By adjusting the thickness of the dried fruit to the above numerical ranges, the dried fruit can be made less susceptible to damage.

In the technology of the disclosure, water activity of the solid object is preferably suppressed within a predetermined range. Suppressing the water activity of the solid object within the predetermined range makes it possible to suppress proliferation of microorganisms even when the solid object is, for example, the produce item LS, and enables contribution to improvement of quality of a packaged beverage and maintenance of taste. Deformation and discoloration of the produce item LS caused by proliferation of microorganisms can also be suppressed.

Water activity is a value obtained by dividing a vapor pressure of food under the same conditions by vapor pressure. Specifically, a water activity Aw of food to be measured can be defined as Aw = P/P0, where P is a vapor pressure in a sealed container in a state in which the inside of the sealed container has reached equilibrium after the food has been stored in the sealed container, and P0 is a vapor pressure in a state in which the inside of the sealed container has similarly reached a parallel state after the food has been replaced with pure water. When water activity is 1.0, moisture in the food is only so-called "free water" and no "bound water" is present, and therefore microorganisms readily proliferate. As the value of water activity becomes smaller, a proportion of "free water" relative to moisture in the food becomes smaller and a proportion of "bound water" becomes greater, and therefore microorganisms are less likely to proliferate.

In this case, when water activity is 0.80 or lower, an effect of suppressing proliferation of microorganisms is obtained in, for example, dried fruit as an example of the produce item LS.

Further, when water activity is 0.75 or lower, an effect of suppressing proliferation of microorganisms in the dried fruit is greater than in a case of more than 0.75 and 0.80 or lower. When water activity is 0.75 or lower, an effect of suppressing proliferation of microorganisms is also obtained even when, for example, the solid object is jelly (an edible "gel").

Particularly, when water activity is 0.65 or lower, an effect of suppressing proliferation of microorganisms in the dried fruit is still greater than in a case of more than 0.65 and 0.75 or lower.

As a method of measuring water activity, the technology of the disclosure can use a water activity measuring device "AquaLab TDL 2" manufactured by Meter Japan, Inc. (hereinafter simply referred to as the "water activity measuring device"). In the water activity measuring device, relative humidity is measured by irradiating a space above a sample with a tunable diode laser, and water activity is determined. Water activity can be measured without being affected by volatile components of the produce item LS.

Before use of the water activity measuring device, or at an appropriate timing during use of the water activity measuring device, accuracy of the water activity measuring device is checked, and calibration is performed when the accuracy has decreased. For the check and the calibration, the following two types of water activity standard solutions manufactured by Meter Japan, Inc. can be used as reagents.
Water activity standard solution A: 0.250 aw 6 mol/kg Nacl
Water activity standard solution B: 0.760 aw 13.41 mol/kg Licl

Then, a sample cup into which each water activity standard solution has been poured is set in a chamber of the water activity measuring device, and it is confirmed that a difference between two measured values of water activity is within measurement accuracy (+/-0.005). When the difference between the two measured values of water activity exceeds the measurement accuracy for either water activity standard solution A or B, calibration is performed in accordance with a predetermined calibration procedure for the water activity measuring device.

When water activity of the produce item LS is actually measured, the respective measurement steps can be carried out by the following procedure. In the following, a sliced piece obtained by slicing lemon (lemon slice) is exemplified as the produce item LS.
(1) The water activity measuring device is warmed up, and it is confirmed that a base temperature is stable at a predetermined temperature (25°C).
(2) It is confirmed that no moisture is present in a sample cup of the water activity measuring device and that the sample cup is sufficiently dry.
(3) A sample (10 or more lemon slices) is pulverized.
(4) Material after pulverization is transferred to the sample cup.
(5) The sample cup is set in the chamber of the water activity measuring device, and water activity is measured.
(6) A second measurement of water activity is performed by steps (4) and (5), and two measured values are compared. When the difference between the measured values is within the measurement accuracy (+/-0.005), the first measured value is adopted as correct. When the difference between the measured values exceeds the measurement accuracy, for example, cleaning of the water activity measuring device and then the above calibration are performed, and water activity of the produce item LS is measured again in accordance with the measurement procedure of (1) to (6). Cleaning of the water activity measuring device is performed in accordance with a predetermined procedure decided in advance.

In a case in which a beverage to be combined is whisky or sake, a wood chip may be used in place of the produce item LS. By putting the wood chip into whisky or sake and aging the wood chip, fragrance suitable for whisky or sake can be imparted. Even in the case of the wood chip, a shape is not particularly limited, and may be, for example, a sliced shape, or may be another shape. In the case of the wood chip, a thickness may be, for example, from 1.0 mm to 15 mm, or may be from 5.0 mm to 9.0 mm.

The control device 10 according to the embodiment controls operations of the robots R1 to R5 of the parallel link robot 20. The control device 10 controls the parallel link robot 20 such that the robots R1 to R5 of the parallel link robot 20 hold the produce item LS conveyed on the second line L2 one unit at a time and load the held produce item LS into the opening of the empty can KN conveyed on the first line L1. Here, "holding one unit at a time" means that one produce item LS may be held, or two or more produce items LS may be held in a stacked manner.

Next, the first line L1 and the second line L2, which are plural production lines, will be specifically described with reference to Fig. 1.

First, the empty can KN loaded on a pallet is transferred to a conveyor, that is, the first line L1.

The empty can KN transferred to the first line L1 is conveyed by a timing screw.

On the second line L2, temporarily stored produce items LS are placed on a belt, conveyed, and supplied to the bowl feeder 110. The bowl feeder 110 arranges the produce items LS conveyed by the belt in a fixed orientation by applying vibration to the produce items LS, and supplies the produce items LS to the grading conveyor 111. The grading conveyor 111 sorts the produce items LS. The produce items LS sorted by the grading conveyor 111 are placed on a belt and conveyed.

The robots R1 to R5 of the parallel link robot 20, in accordance with control by the control device 10, hold the produce items LS conveyed on the second line L2 (belt conveyance) one unit at a time and load the held produce items LS into the opening of the empty can KN conveyed on the first line L1 (timing screw).

The empty can KN into which the produce item LS has been loaded by the parallel link robot 20 is conveyed from the first line L1 to a subsequent step. In the subsequent step, a beverage is filled into the empty can KN into which the produce item LS has been loaded, or a lid is attached to a can body portion of the empty can KN.

The return NG inspection machine 112 on the second line L2 removes, from among the produce items LS not picked up by the parallel link robot 20, produce items LS that do not satisfy criteria in shape and color area. The produce items LS not removed by the return NG inspection machine 112 are supplied again to the bowl feeder 110.

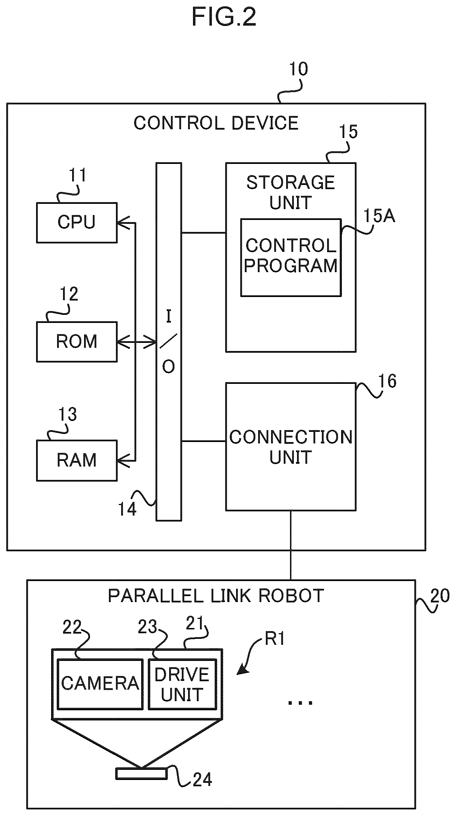

Fig. 2 is a block diagram illustrating an example of a hardware configuration of the control device 10 and the parallel link robot 20 according to the first embodiment.

As shown in Fig. 2, the control device 10 according to the embodiment includes a central processing unit (CPU) 11, a read only memory (ROM) 12, a random access memory (RAM) 13, an input/output interface (I/O) 14, a storage unit 15, and a connection unit 16.

The CPU 11, the ROM 12, the RAM 13, and the I/O 14 are connected to each other via a bus. Functional units including the storage unit 15 and the connection unit 16 are connected to the I/O 14. Each of the functional units is communicably connected to the CPU 11 via the I/O 14.

The CPU 11, the ROM 12, the RAM 13, and the I/O 14 constitute a control unit. The control unit may be configured as a sub control unit that controls part of operations of the control device 10, or may be configured as part of a main control unit that controls overall operations of the control device 10. For some or all of the respective blocks of the control unit, integrated circuits or an IC chipset such as large scale integration (LSI) are used, for example. Separate circuits may be used for the respective blocks, or a circuit in which some or all of the blocks are integrated may be used. The respective blocks may be provided integrally, or some of the blocks may be separately provided. In each of the respective blocks, a part of the block may be separately provided. For integration of the control unit, not only LSI but also a dedicated circuit or a general-purpose processor may be used.

As the storage unit 15, for example, a hard disk drive (HDD), a solid state drive (SSD), or a flash memory is used. A control program 15A according to the embodiment is stored in the storage unit 15. The control program 15A may be stored in the ROM 12.

The control program 15A may be installed in advance in the control device 10, for example. The control program 15A may also be implemented by being stored in a non-volatile non-transitory storage medium or distributed via a network and appropriately installed in the control device 10. Examples of the non-volatile non-transitory storage medium include a compact disc read only memory (CD-ROM), a magneto-optical disk, a hard disk drive (HDD), a digital versatile disc read only memory (DVD-ROM), a flash memory, and a memory card.

The connection unit 16 is an interface for connecting each of the robots R1 to R5 constituting the parallel link robot 20. Each of the robots R1 to R5 has a similar configuration, and below, a configuration of the robot R1 will be described as an example.

The robot R1 includes a main body unit 21 and a holder 24. The main body unit 21 includes a camera 22 and a drive unit 23. One camera 22 is provided for each robot. The camera 22 captures plural produce items LS conveyed on the second line L2 from above, and the robot R1 transmits the obtained captured image to the control device 10. The drive unit 23 moves the robot R1 in accordance with an instruction from the control device 10 and drives the holder 24 to perform a holding operation and a loading operation of the produce item LS. The holder 24 detachably holds the produce item LS. For example, a vacuum suction gripper is employed as the holder 24. A shape of the gripper is not particularly limited, but the gripper is preferably, for example, a Bernoulli gripper. More preferably, a Bernoulli gripper to which a Coanda effect is imparted may be used. By employing the Bernoulli gripper, the produce item LS can be accurately held without damaging the produce item LS. Here, "holding" may be suction or gripping. In the case of gripping, a gripping gripper may be employed.

The robot R1 is configured to hold the produce item LS conveyed on the second line L2 one unit at a time, and is configured to perform an operation of loading the held produce item LS into the empty can KN through the opening. The robot R1 captures the produce item LS with the camera 22, acquires coordinate data of the produce item LS that can be picked up by the holder 24, and picks up, for example, one produce item LS. The robot R1 is synchronized with an encoder of the timing screw that conveys the empty can KN and releases (loads) the produce item LS into the empty can KN. Release into the empty can KN is executed by linking each robot and a corresponding empty can KN (one empty can KN here) in a synchronization mode (also referred to as a tracking mode). Before loading into the empty can KN, the camera 22 receives a trigger from the encoder of the timing screw or, in response to a trigger from the camera 22 itself, captures a pickable area, and the robot R1 acquires coordinate data of one or more produce items LS that can be loaded from the captured image. The control device 10 controls the robot R1 based on coordinate data obtained from the robot R1 and performs picking of the produce item LS. The robot R1 allows, for example, overlapping produce items LS, produce items LS with defective size, chipped produce items LS, produce items LS with missing-section defects, and the like to pass without giving picking coordinates. However, even when produce items LS overlap, upper and lower positions can be determined by image analysis, and therefore an upper produce item LS can be picked up.

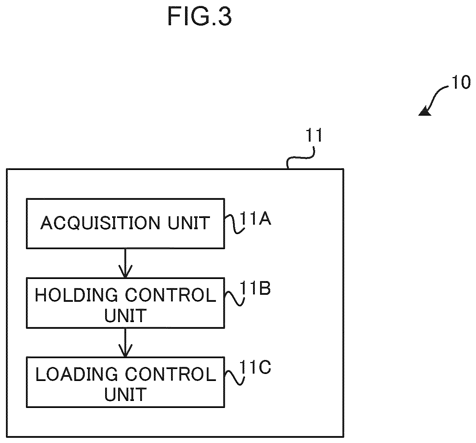

The CPU 11 of the control device 10 according to the embodiment functions as each unit illustrated in Fig. 3 by writing the control program 15A stored in the storage unit 15 into the RAM 13 and executing the control program 15A.

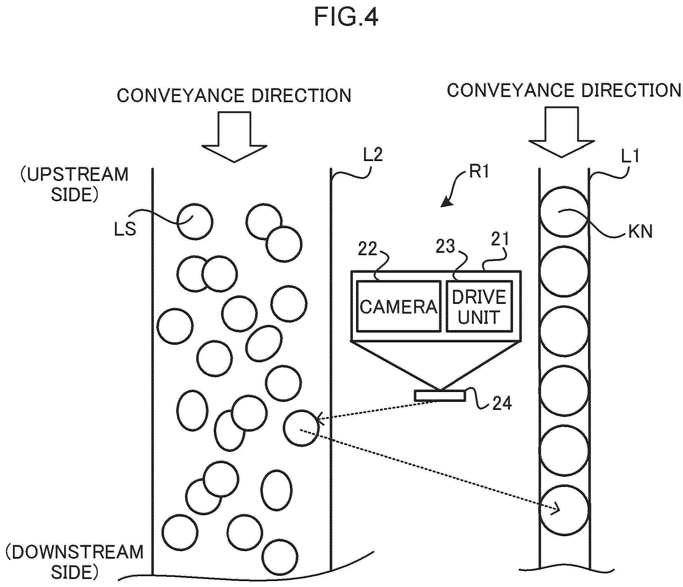

Fig. 3 is a block diagram illustrating an example of a functional configuration of the control device 10 according to the first embodiment. Fig. 4 is a diagram for explaining a holding operation and a loading operation of the produce item LS according to the first embodiment.

As shown in Fig. 3, the CPU 11 of the control device 10 according to the embodiment functions as an acquisition unit 11A, a holding control unit 11B, and a loading control unit 11C.

As shown in Fig. 4, the empty can KN is conveyed on the first line L1, and the produce item LS is conveyed on the second line L2. The robot R1 captures, with the camera 22 from above, the produce items LS randomly conveyed on the second line L2, and transmits a captured image to the control device 10.

The acquisition unit 11A acquires the captured image transmitted from the robot R1.

As shown in Fig. 4, the holding control unit 11B controls the robot R1 such that the robot R1 holds the produce items LS conveyed on the second line L2 one unit at a time. Specifically, the holding control unit 11B selects, from the captured image acquired by the acquisition unit 11A, as the produce item LS to be held, a produce item LS of plural produce items LS whose form satisfies a predetermined quality criterion. Here, the predetermined quality criterion includes, for example, an index value representing a degree of circularity. The predetermined quality criterion may include an index value representing a degree of circularity and a color area. Examples of the index value representing a degree of circularity include circularity and roundness. Circularity is an index value representing closeness to a geometrically correct circle (a true circle), and a larger circularity indicates that the shape is closer to a circle. Roundness is an index value representing a magnitude of deviation from a geometrically correct circle, and a smaller roundness indicates that the shape is closer to a circle. The color area represents an area of a color of a specific portion (for example, a flesh portion) of the produce item LS. Circularity, roundness, and the color area can be derived by a known image analysis method.

In this case, the holding control unit 11B selects, as the produce item LS to be held, a produce item LS for which the index value representing a degree of circularity satisfies a certain condition, specifically, a produce item LS having a circularity equal to or greater than a threshold or a roundness equal to or less than a threshold. However, the threshold for circularity and the threshold for roundness are different from each other. The holding control unit 11B may select, as the produce item LS to be held, a produce item LS for which both the circularity and the color area are equal to or greater than thresholds, or a produce item LS for which the roundness is equal to or less than a threshold and the color area is equal to or greater than a threshold. Here, since a circular produce item LS is assumed, circularity or roundness is derived, but since the shape may also be polygonal, an appropriate index value may be derived in accordance with the shape of the produce item LS. In a case in which the produce item LS is polygonal, for example, a produce item LS having a shape of a certain level or higher can be selected using pattern matching or the like. For example, a contour of the produce item LS may be converted into an index, or a color of the produce item LS may be binarized and black-and-white gradation may be converted into an index for determination. The holding control unit 11B controls the holder 24 of the robot R1 to suction and hold the selected produce item LS. Here, a position of the produce item LS to be held can be obtained by coordinate-transforming coordinate data of the produce item LS obtained from the robot R1 based on a coordinate change amount corresponding to a conveyance speed of the second line L2.

That is, the holding control unit 11B selects, from the captured image, a produce item LS satisfying the predetermined quality criterion (for example, circularity and color area), and acquires coordinate data of the selected produce item LS from the robot R1. The holding control unit 11B coordinate-transforms the coordinate data acquired from the robot R1 based on a coordinate change amount corresponding to the conveyance speed of the second line L2, and controls the robot R1 such that the robot R1 moves to the coordinate after coordinate transformation. The robot R1 moves above the selected produce item LS and turns on a suction function of the holder 24, and after reaching a position of the coordinate after coordinate transformation, the robot R1 descends and suctions the selected produce item LS.

As shown in Fig. 4, the loading control unit 11C controls the robot R1 such that the produce item LS held by the robot R1 is loaded into the opening of the empty can KN conveyed on the first line L1. Specifically, the loading control unit 11C controls the produce item LS to be loaded into the opening of the empty can KN while the holder 24 holding the produce item LS is moved above the opening of the empty can KN and the holder 24 is moved in the same direction as the conveyance direction of the empty can KN. The loading control unit 11C preferably controls the produce item LS to be loaded into the opening of the empty can KN while a movement speed of the holder 24 holding the produce item LS is synchronized with a conveyance speed of the empty can KN and the holder 24 is moved in advance of the empty can KN to a downstream side in the conveyance direction.

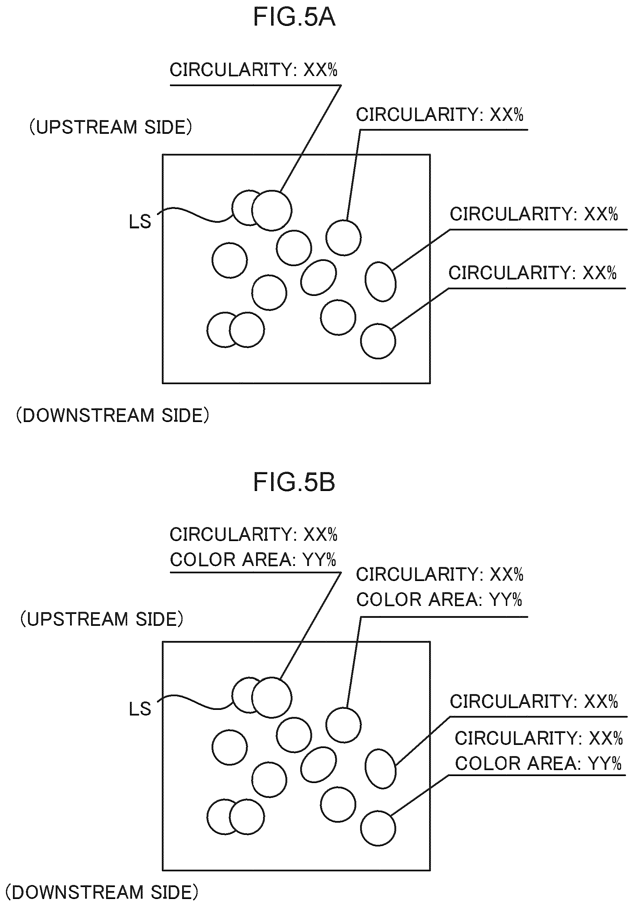

Next, with reference to Figs. 5A and 5B, a method of selecting the produce item LS from the captured image will be specifically described. Below, a case in which circularity is used as an example of the index value representing a degree of circularity will be described, but roundness may be used instead of circularity.

Fig. 5Ais a diagram illustrating an example of a captured image from which circularity of the produce item LS has been derived. Fig. 5B is a diagram illustrating an example of a captured image from which circularity and a color area of the produce item LS have been derived.

As an example, as shown in Fig. 5A, the holding control unit 11B performs image analysis on plural produce items LS included in the captured image and derives circularity. Circularity is derived for all of the produce items LS in the captured image. However, when two produce items LS overlap, circularity of the lower produce item LS may be difficult to derive, and therefore the set of two may be regarded as one body. The same applies when three or more produce items LS overlap. Whether or not the produce items LS overlap can be determined from the captured image. The holding control unit 11B determines whether or not the obtained circularity is equal to or greater than a first threshold. Since the produce items LS also include elliptical shapes, the first threshold is preferably set so as to allow a certain degree of tolerance. The first threshold may be appropriately set, for example, in a range of from 70% to less than 100%. When the circularity is 100%, the circularity means a true circle. In a case in which roundness is used, the holding control unit 11B determines whether or not the obtained roundness is equal to or less than the first threshold. In this case, the first threshold may be appropriately set, for example, in a range of from more than 0% to 30%. When the roundness is 0%, the roundness means a true circle.

As an example, as shown in Fig. 5B, the holding control unit 11B performs image analysis on plural produce items LS whose circularity is equal to or greater than the first threshold, and derives a color area. The color area is derived only for the produce items LS whose circularity is equal to or greater than the first threshold. That is, the color area is not derived for a produce item LS whose circularity is less than the first threshold. As described above, the color area represents an area of a color of a specific portion (for example, a flesh portion), and is expressed, for example, as a ratio of an area of the specific portion to an overall area. The holding control unit 11B determines whether or not the obtained color area is equal to or greater than a second threshold. The second threshold may be appropriately set, for example, in a range of from 70% to less than 100%, and more preferably in a range of from 80% to less than 100%.

That is, the holding control unit 11B identifies, from the captured image, plural produce items LS whose circularity is equal to or greater than the first threshold, and selects, from the identified plural produce items LS, a produce item LS whose color area is equal to or greater than the second threshold. In a case in which plural produce items LS having both the circularity and the color area equal to or greater than the thresholds are present, for example, a produce item LS located farthest downstream may be selected. Here, a case in which the circularity and the color area are used has been described, but as described above, only the circularity may be used. In this case, the holding control unit 11B only needs to select, from the captured image, a produce item LS whose circularity is equal to or greater than the threshold.

Here, the holding control unit 11B controls the selected produce item LS to be suctioned and held by the holder 24 of the robot R1. At this time, the holding control unit 11B may select the number of produce items LS greater than the number of holders 24, and may control another selected produce item LS to be held when the robot R1 fails to hold or load one selected produce item LS. Since one holder 24 is provided for each robot in the embodiment, for example, two produce items LS may be selected in advance. This enables, when holding or loading of the first produce item LS fails, loading to be performed by holding the second produce item LS, and the produce item LS can be loaded more reliably. Another holder 24 may be provided as a spare. In this case, the produce item LS may also be held by the spare holder 24 in the same manner as by the holder 24 during the loading operation, and when the holder 24 during the loading operation fails to load the produce item LS, the spare holder 24 may load the produce item LS instead of the holder 24 during the loading operation.

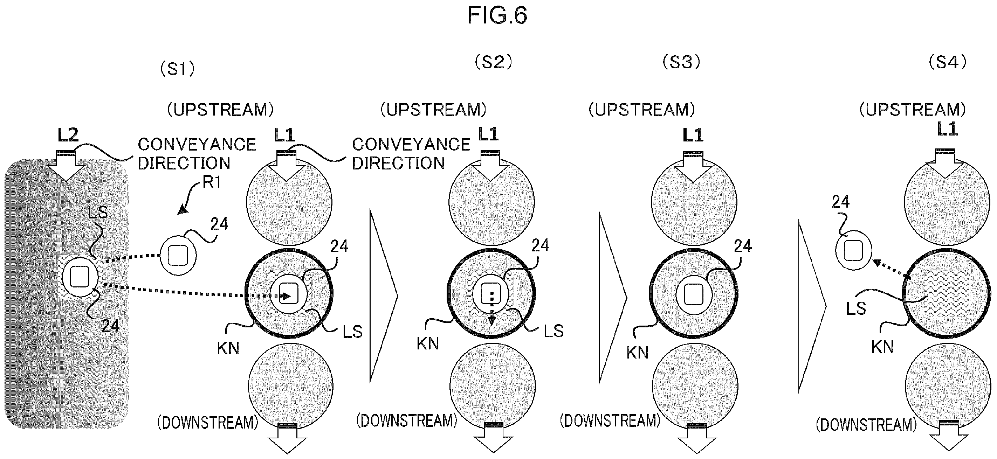

Next, with reference to Figs. 6 to 8, a method of loading the produce item LS into the opening of the empty can KN will be specifically described.

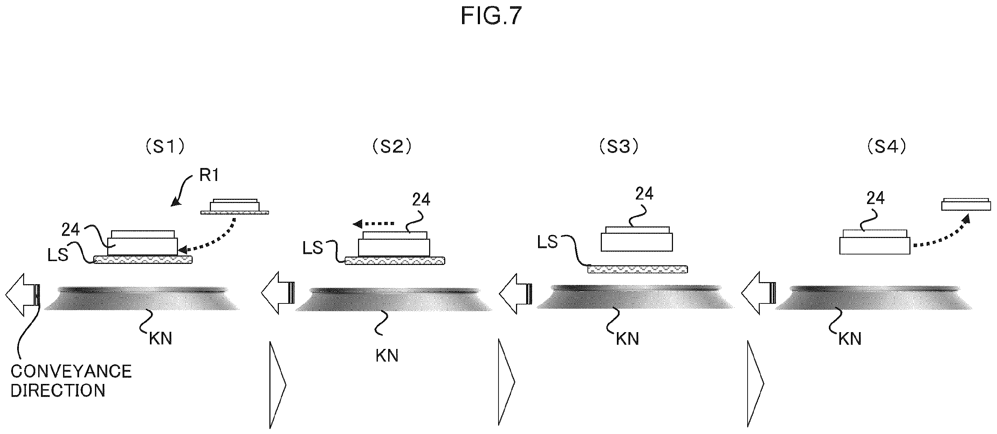

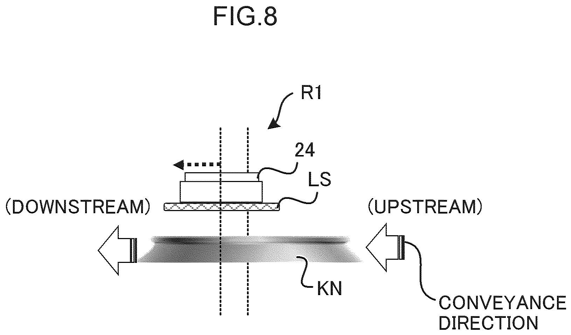

Fig. 6 is a top view schematically illustrating a state in which the robot R1 loads the produce item LS into the opening of the empty can KN. Fig. 7 is a side view schematically illustrating the state in which the robot R1 loads the produce item LS into the opening of the empty can KN. (S1) to (S4) of Fig. 6 correspond to (S1) to (S4) of Fig. 7. In Figs. 6 and 7, hollow triangles indicate a time-series flow, and the state transitions chronologically from (S1) toward (S4). Fig. 8 is a side view illustrating a state in which a movement speed of the robot R1 holding the produce item LS is synchronized with a conveyance speed of the empty can KN. In Figs. 6 to 8, only the holder 24 of the robot R1 is illustrated for simplification of illustration.

In (S1) of Fig. 6 and (S1) of Fig. 7, the control device 10 selects, from the produce items LS conveyed on the second line L2, the produce item LS to be held, and causes the selected produce item LS to be suctioned and held by the holder 24 of the robot R1. Then, the control device 10 moves the holder 24 above the opening of the empty can KN conveyed on the first line L1 while the holder 24 continues to hold the produce item LS.

In (S2) of Fig. 6 and (S2) of Fig. 7, the control device 10 moves the holder 24 in the same direction as the conveyance direction of the empty can KN (the direction indicated by arrows). That is, a movement speed of the holder 24 holding the produce item LS is synchronized with the conveyance speed of the empty can KN. Here, "synchronization" means that the movement speed of the holder 24 and the conveyance speed of the empty can KN need not be completely identical, and may be identical within a predetermined allowable range.

Here, as shown in Fig. 8, the holder 24 of the robot R1 is preferably moved in advance of the empty can KN to the downstream side in the conveyance direction. That is, a center of the holder 24 is displaced to the downstream side in the conveyance direction relative to a center of the opening of the empty can KN. This makes it possible to load the produce item LS into the empty can KN more reliably.

In (S3) of Fig. 6 and (S3) of Fig. 7, the control device 10 turns off suction of the holder 24 and loads (releases) the produce item LS into the opening of the empty can KN while moving the holder 24 in the same direction as the conveyance direction of the empty can KN (the direction indicated by arrows). That is, since the holder 24 moves above the opening of the empty can KN and causes the produce item LS to fall while advancing in the same direction, the produce item LS appears, when viewed from a side, to have fallen in an oblique direction due to inertial force. Here, "falling" may be, for example, free fall, but air may be discharged from the holder 24 simultaneously with turning suction of the holder 24 off to promote falling. Discharging air is more preferable because loading accuracy can be improved as compared with free fall. As shown in Fig. 8, when the holder 24 drops the produce item LS while advancing slightly ahead of the empty can KN, the produce item LS strikes a wall surface on the downstream side in the conveyance direction of the empty can KN and falls into the empty can KN.

In (S4) of Fig. 6 and (S4) of Fig. 7, the control device 10 moves the holder 24 of the robot R1 from the first line L1 to a predetermined origin position.

In Fig. 8, a case in which the holder 24 causes the produce item LS to fall while advancing slightly ahead of the empty can KN has been described, but the disclosure is not limited to this case. The produce item LS may be caused to fall at a position where a center of the opening of the empty can KN and a center of the produce item LS are aligned. Here, the produce item LS may be caused to fall at a position where the center of the opening of the empty can KN and the center of the produce item LS are aligned while the movement speed of the holder 24 is within the above allowable range and is faster than the conveyance speed of the empty can KN. In this way, the produce item LS falls while advancing slightly faster than the empty can KN due to inertial force, strikes a wall surface on the downstream side in the conveyance direction of the empty can KN, and falls into the empty can KN.

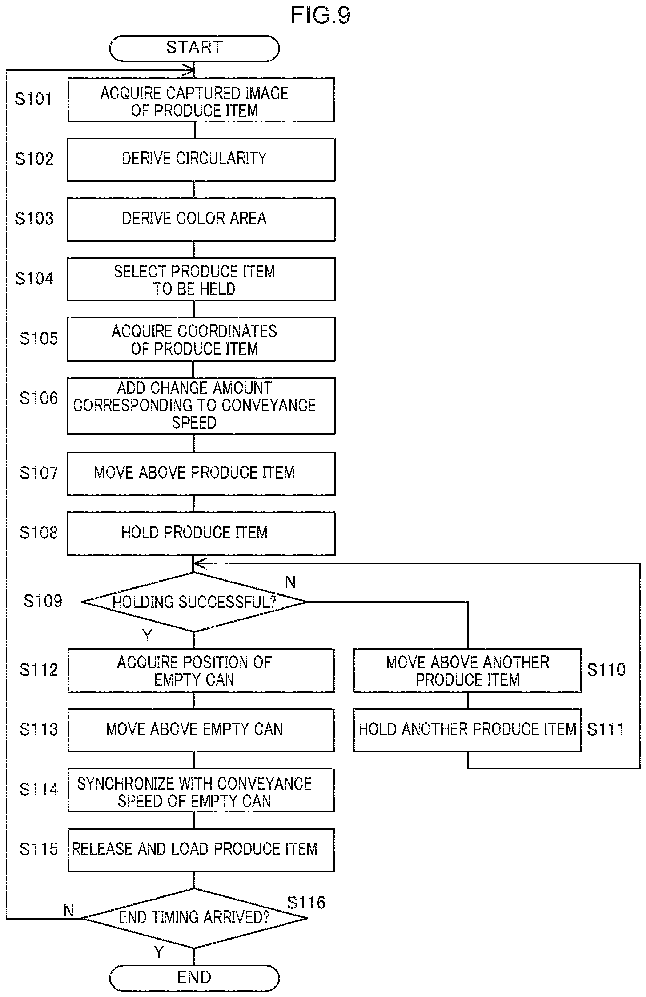

Next, with reference to Fig. 9, an operation of the control device 10 according to the first embodiment will be described.

Fig. 9 is a flowchart illustrating an example of a flow of processing by the control program 15A according to the first embodiment.

First, when execution of control of the parallel link robot 20 is instructed to the control device 10, the control program 15A is started by the CPU 11, and the following steps are executed.

In step S101 of Fig. 9, as an example, the CPU 11 acquires the captured image shown in Fig. 5A described above. As described above, the captured image is an image obtained by the camera 22 of the robot R1 capturing from above the produce items LS randomly conveyed on the second line L2.

In step S102, as an example, as shown in Fig. 5A described above, the CPU 11 performs image analysis on plural produce items LS included in the captured image and derives circularity.

In step S103, as an example, as shown in Fig. 5B described above, the CPU 11 performs image analysis on plural produce items LS whose circularity derived in step S102 is equal to or greater than the first threshold, and derives a color area, which is an area of a color of a specific portion (for example, a fruit portion).

In step S104, the CPU 11 selects, as the produce item LS to be held, a produce item LS whose color area derived in step S103 is equal to or greater than the second threshold. The number of produce items LS greater than the number of holders 24 may be selected. Below, description will be given on the assumption that the number of produce items LS greater than the number of holders 24 is selected in preparation for failure of holding by the robot R1.

In step S105, the CPU 11 acquires coordinate data of the produce item LS selected in step S104 from the robot R1.

In step S106, the CPU 11 adds, to the coordinate data acquired in step S105, a coordinate change amount corresponding to the conveyance speed of the second line L2 that conveys the produce item LS, and transforms the coordinate data of the selected produce item LS.

In step S107, as an example, as shown in (S1) of Fig. 6 described above, the CPU 11 moves the holder 24 of the robot R1 above the selected produce item LS conveyed on the second line L2 based on the coordinate data after coordinate transformation.

In step S108, the CPU 11 turns on suction of the holder 24 of the robot R1 and suctions and holds the selected produce item LS conveyed on the second line L2.

In step S109, the CPU 11 determines whether or not the robot R1 has succeeded in holding the produce item LS. When it is determined that holding of the produce item LS has failed (negative determination), the process proceeds to step S110, and when it is determined that holding of the produce item LS has succeeded (affirmative determination), the process proceeds to step S112.

In step S110, the CPU 11 moves the holder 24 of the robot R1 above another selected produce item LS conveyed on the second line L2.

In step S111, the CPU 11 turns on suction of the holder 24 of the robot R1, suctions and holds the other selected produce item LS conveyed on the second line L2, and proceeds to step S109.

In step S112, the CPU 11 acquires a position of the empty can KN serving as a loading target. Here, the robot R1 and the empty can KN serving as the loading target are associated with each other in advance, and the position of the empty can KN serving as the loading target can be acquired as line information regarding the first line L1.

In step S113, as an example, as shown in (S2) of Fig. 6 and (S2) of Fig. 7 described above, the CPU 11 moves the holder 24 holding the produce item LS above the opening of the empty can KN conveyed on the first line L1 based on the position of the empty can KN acquired in step S112.

In step S114, as an example, as shown in (S2) of Fig. 6 and (S2) of Fig. 7 described above, the CPU 11 moves the holder 24 in the same direction as the conveyance direction of the empty can KN. That is, a movement speed of the holder 24 holding the produce item LS is synchronized with the conveyance speed of the empty can KN.

In step S115, as an example, as shown in (S3) of Fig. 6 and (S3) of Fig. 7 described above, the CPU 11 turns off suction of the holder 24 and loads (releases) the produce item LS into the opening of the empty can KN while moving the holder 24 in the same direction as the conveyance direction of the empty can KN. Then, as an example, as shown in (S4) of Fig. 6 and (S4) of Fig. 7 described above, the CPU 11 moves the holder 24 of the robot R1 from the first line L1 to a predetermined origin position.

In step S116, the CPU 11 determines whether or not an end timing has arrived. When it is determined that the end timing has not arrived (negative determination), the process returns to step S101 and repeats the processing, and when it is determined that the end timing has arrived (affirmative determination), the series of processing by the control program 15A ends.

As described above, according to the embodiment, a solid object satisfying desired quality can be selected from non-uniform solid objects conveyed randomly and can be held one unit at a time. The held solid object can also be moved in synchronization with an empty container conveyed at high speed. Therefore, the solid object held one unit at a time can be loaded into the opening of the empty container with high accuracy.

### [Second Embodiment]

In the first embodiment described above, a mode in which the solid object is held one unit at a time and loaded into the opening of the empty container has been described. In a second embodiment, a mode in which plural solid objects are held side by side and loaded into openings of plural empty containers at a predetermined timing will be described.

Components included in a beverage production system 100A according to the second embodiment and components included in the beverage production system 100 described in the first embodiment are the same except that a configuration of the parallel link robot 20 is different. For this reason, the same reference signs are assigned to components that are the same as the components included in the beverage production system 100 described in the first embodiment, and repeated description of the components is omitted.

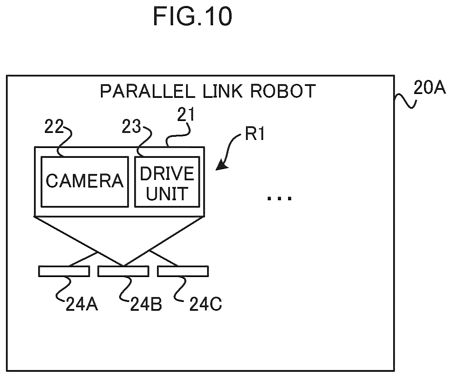

Fig. 10 is a block diagram illustrating an example of a hardware configuration of a parallel link robot 20A according to the second embodiment.

As shown in Fig. 10, the parallel link robot 20A according to the embodiment includes plural robots R1 to R5, similarly to the first embodiment. Each of the robots R1 to R5 has a similar configuration, and below, a configuration of the robot R1 will be described as an example.

The robot R1 includes a main body unit 21 and plural holders 24A to 24C. When no need arises to distinguish among the plural holders 24A to 24C in the description, the holders 24A to 24C will be simply referred to as the holder 24. In the example of Fig. 10, three holders 24 are illustrated, but two or more holders 24 only need to be provided. The drive unit 23 moves the robot R1 in accordance with an instruction from the control device 10 and drives each of the holders 24 to perform a holding operation and a loading operation of the produce item LS. Each of the plural holders 24 detachably holds the produce item LS. Plural produce items LS are held in a row along the conveyance direction by the plural holders 24. For example, a vacuum suction gripper is employed for each of the plural holders 24. A shape of the gripper is not particularly limited, but the gripper is preferably, for example, a Bernoulli gripper. More preferably, a Bernoulli gripper to which a Coanda effect is imparted may be used. By employing the Bernoulli gripper, the produce item LS can be accurately held without damaging the produce item LS. Here, "holding" may be suction or gripping. In the case of gripping, a gripping gripper may be employed.

The robot R1 is configured to hold plural produce items LS conveyed on the second line L2 in a row, and is configured to perform an operation of loading the held plural produce items LS through respective openings of plural empty cans KN. The robot R1 captures the produce item LS with the camera 22, acquires coordinate data of the produce item LS that can be picked up by each of the plural holders 24, and sequentially picks up plural produce items LS (three produce items LS here). The robot R1 is synchronized with an encoder of the timing screw that conveys the empty can KN and releases (loads) plural produce items LS into plural empty cans KN (three empty cans KN here) at a predetermined timing. Here, "releasing (loading) at a predetermined timing" means that the plural produce items LS may be released (loaded) simultaneously, or the plural produce items LS may be sequentially released (loaded) with a predetermined time shift. Here, "simultaneously" is not limited to a case in which timing is completely simultaneous, and may be simultaneous within a predetermined allowable range. The predetermined allowable range can be set, for example, according to a timing deviation due to an accuracy error of the device. Further, for the "predetermined time", an appropriate value can be set, for example, in accordance with performance, specifications, and the like required for the device. Release into the empty can KN is executed by linking each robot and corresponding plural empty cans KN (three empty cans KN here) in a synchronization mode (tracking mode). Before loading into the empty can KN, the camera 22 receives a trigger from the encoder of the timing screw or, in response to a trigger from the camera 22 itself, captures a pickable area, and the robot R1 acquires coordinate data of three or more produce items LS that can be loaded from the captured image. The control device 10 controls the robot R1 based on coordinate data obtained from the robot R1 and performs picking of the plural produce items LS. The robot R1 allows, for example, overlapping produce items LS, produce items LS with defective size, chipped produce items LS, produce items LS with missing-section defects, and the like to pass without giving picking coordinates.

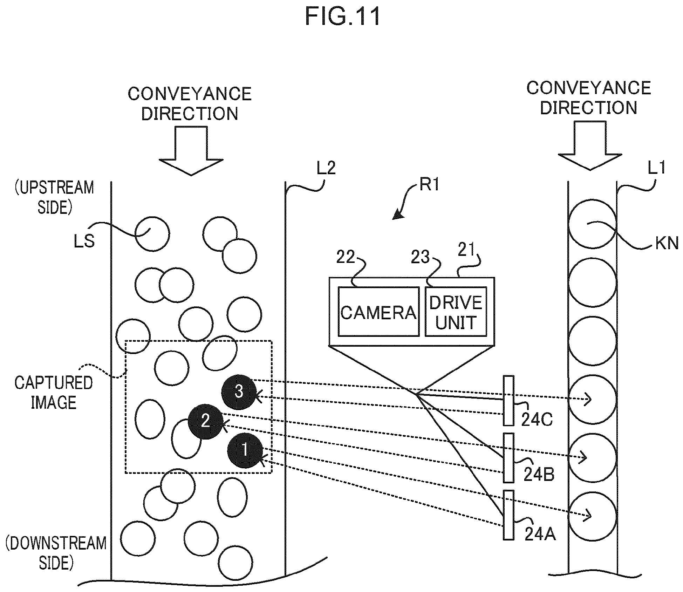

Fig. 11 is a diagram for explaining a holding operation and a loading operation of plural produce items LS according to the second embodiment.

The CPU 11 of the control device 10 according to the embodiment functions as the acquisition unit 11A, the holding control unit 11B, and the loading control unit 11C, as illustrated in Fig. 3 described above.

As shown in Fig. 11, the empty can KN is conveyed on the first line L1, and the produce item LS is conveyed on the second line L2. The robot R1 captures, with the camera 22 from above, the produce items LS randomly conveyed on the second line L2, and transmits the captured image (a range surrounded by a dotted line in Fig. 11) to the control device 10.

The acquisition unit 11A acquires the captured image transmitted from the robot R1.

As shown in Fig. 11, the holding control unit 11B controls the robot R1 such that the robot R1 holds plural produce items LS conveyed on the second line L2 in a row. Specifically, the holding control unit 11B selects, from the captured image acquired by the acquisition unit 11A, plural produce items LS whose form satisfies a predetermined quality criterion (for example, circularity and color area) as produce items LS to be held, and assigns priorities to the selected plural produce items LS in order from a downstream side in the conveyance direction. Here, the number of selected produce items LS is equal to or greater than the number of the holders 24. In the example of Fig. 11, priorities "1" to "3" are assigned in order from a downstream side in the conveyance direction of the captured image. The holding control unit 11B selects, as plural produce items LS to be held, plural produce items LS having a circularity equal to or greater than a threshold, or selects, as plural produce items LS to be held, plural produce items LS having both a circularity and a color area equal to or greater than thresholds. As described above, roundness may be used instead of circularity. In a case in which roundness is used, the holding control unit 11B selects plural produce items LS having a roundness equal to or less than a threshold, or selects plural produce items LS having a roundness equal to or less than a threshold and a color area equal to or greater than a threshold. Here, since circular produce items LS are assumed, circularity is derived, but since the shape may also be polygonal, an appropriate index value may be derived in accordance with the shape of the produce item LS. The holding control unit 11B controls the plural holders 24 of the robot R1 in accordance with the assigned priorities to sequentially suction and hold the selected plural produce items LS. Here, each position of the plural produce items LS to be held can be obtained by coordinate-transforming coordinate data of each of the plural produce items LS obtained from the robot R1 based on a coordinate change amount corresponding to the conveyance speed of the second line L2.

That is, the holding control unit 11B selects, from the captured image, plural produce items LS satisfying the predetermined quality criterion (for example, circularity and color area), and acquires coordinate data from the robot R1 for each of the selected plural produce items LS. The holding control unit 11B coordinate-transforms each of the plural coordinate data acquired from the robot R1 based on a coordinate change amount corresponding to the conveyance speed of the second line L2, and controls the robot R1 such that the robot R1 sequentially moves to coordinates after coordinate transformation in accordance with the assigned priorities. The robot R1 moves above the selected produce item LS and turns on a suction function of the holder 24, and after reaching the position of the coordinate after coordinate transformation, the robot R1 descends and suctions the selected produce item LS.

As shown in Fig. 11, the loading control unit 11C controls the robot R1 such that plural produce items LS held in a row by the robot R1 are loaded into respective openings of plural empty cans KN conveyed on the first line L1 at a predetermined timing. Specifically, the loading control unit 11C controls the plural produce items LS to be loaded into the respective openings of the plural empty cans KN at a predetermined timing while the plural holders 24 each holding the produce item LS are moved above openings of corresponding plural empty cans KN and the plural holders 24 are moved in the same direction as the conveyance direction of the empty cans KN. The loading control unit 11C preferably controls the plural produce items LS to be loaded into the respective openings of the plural empty cans KN at a predetermined timing while movement speeds of the plural holders 24 each holding the produce item LS are synchronized with conveyance speeds of the plural empty cans KN and the plural holders 24 are moved in advance of the plural empty cans KN to a downstream side in the conveyance direction.

In the example of Fig. 11, the three produce items LS selected from the captured image (the range surrounded by the dotted line) are sequentially suctioned from the downstream side in the conveyance direction. In this case, priorities (for example, "1", "2", and "3") may be assigned in advance to the selected three produce items LS in order from the downstream side in the conveyance direction. That is, the holder 24A suctions the produce item LS of priority "1", next the holder 24B suctions the produce item LS of priority "2", and next the holder 24C suctions the produce item LS of priority "3". When the second and third produce items LS are to be picked up, a position of the holder 24 is preferably controlled such that the first suctioned produce item LS does not collide with other produce items LS. When the produce items LS are regularly conveyed, the three produce items LS can also be suctioned simultaneously.

The plural holders 24A to 24C are arranged in series as three holders at intervals equal to intervals between the empty cans KN in advance. When the produce items LS are picked up, the produce items LS are sequentially held one by one, and when the produce items LS are dropped into the plural empty cans KN, the held plural produce items LS are released at the predetermined timing.

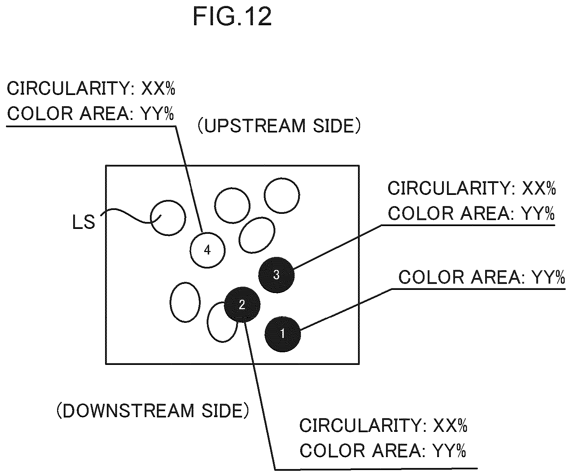

Next, with reference to Fig. 12, a method of selecting plural produce items LS from the captured image and assigning priorities will be specifically described.

Fig. 12 is a diagram illustrating an example of a captured image from which circularity and a color area of the produce item LS have been derived.

As an example, as shown in Fig. 12, the holding control unit 11B identifies, from the captured image, plural produce items LS whose circularity is equal to or greater than the first threshold, selects, from the identified plural produce items LS, plural produce items LS whose color area is equal to or greater than the second threshold, and assigns priorities to the selected plural produce items LS in order from the downstream side in the conveyance direction. At this time, the holding control unit 11B may select the number of produce items LS greater than the number of holders 24 (four produce items LS here). In the example of Fig. 12, priorities (for example, "1", "2", "3 ", and "4") are assigned to the selected four produce items LS. The holding control unit 11B controls each of the selected three produce items LS to be suctioned and held by each of the three holders 24 of the robot R1, and may control another selected produce item LS to be held when the robot R1 fails to hold or load any of the produce items LS. Since three holders 24 are provided for each robot in the embodiment, for example, four produce items LS may be selected in advance. This enables, when holding of any of the three produce items LS fails, holding to be performed by holding the fourth produce item LS, and the produce item LS can be held more reliably.

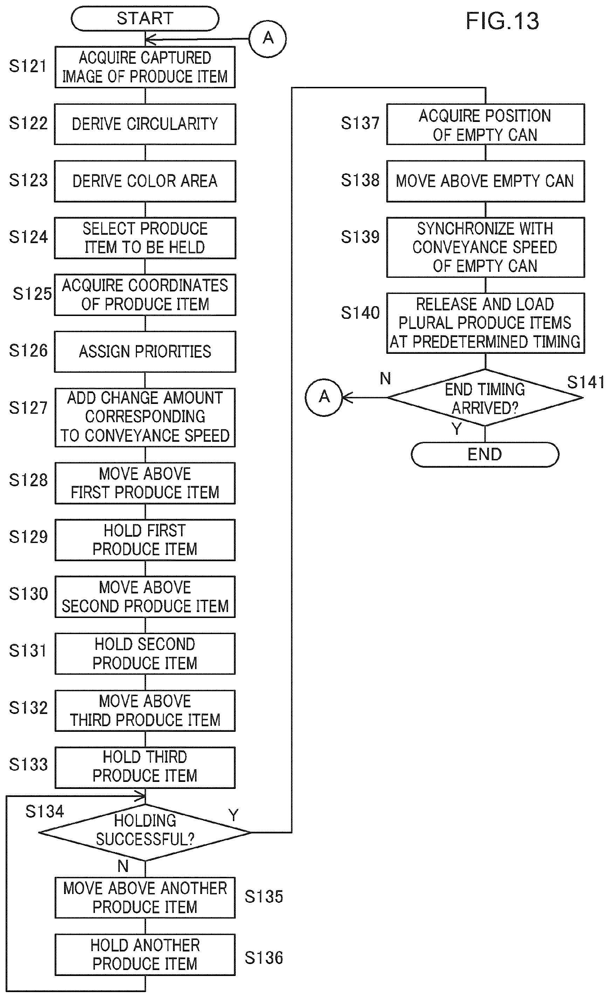

Next, with reference to Fig. 13, an operation of the control device 10 according to the second embodiment will be described.

Fig. 13 is a flowchart illustrating an example of a flow of processing by the control program 15A according to the second embodiment.

First, when execution of control of the parallel link robot 20A is instructed to the control device 10, the control program 15A is started by the CPU 11, and the following steps are executed.

In step S121 of Fig. 13, as an example, the CPU 11 acquires the captured image shown in Fig. 12 described above. As described above, the captured image is an image obtained by the camera 22 of the robot R1 capturing from above the produce items LS randomly conveyed on the second line L2.

In step S122, as an example, as shown in Fig. 12 described above, the CPU 11 performs image analysis on plural produce items LS included in the captured image and derives circularity.

In step S123, as an example, as shown in Fig. 12 described above, the CPU 11 performs image analysis on plural produce items LS whose circularity derived in step S122 is equal to or greater than the first threshold, and derives a color area, which is an area of a color of a specific portion (for example, a fruit portion).

In step S124, the CPU 11 selects, as plural produce items LS to be held, plural produce items LS whose color area derived in step S123 is equal to or greater than the second threshold. The number of produce items LS greater than the number of plural holders 24 may be selected. Below, description will be given on the assumption that the number of produce items LS greater than the number of plural holders 24 is selected in preparation for failure of holding by the robot R1.

In step S125, the CPU 11 acquires coordinate data of each of the plural produce items LS selected in step S124 from the robot R1.

In step S126, as an example, as shown in Fig. 12 described above, the CPU 11 assigns priorities to each of the plural produce items LS selected in step S124 in order from the downstream side in the conveyance direction.

In step S127, the CPU 11 adds, to each of the plural coordinate data acquired in step S125, a coordinate change amount corresponding to the conveyance speed of the second line L2 that conveys the produce item LS, and transforms the coordinate data of each of the selected plural produce items LS.

In step S128, as an example, as shown in Fig. 11, the CPU 11 moves the holder 24A of the robot R1 above the selected first produce item LS conveyed on the second line L2 based on the priority and the coordinate data after coordinate transformation.

In step S129, the CPU 11 turns on suction of the holder 24A of the robot R1 and suctions and holds the selected first produce item LS conveyed on the second line L2.

In step S130, as an example, as shown in Fig. 11, the CPU 11 moves the holder 24B of the robot R1 above the selected second produce item LS conveyed on the second line L2 based on the priority and the coordinate data after coordinate transformation.

In step S131, the CPU 11 turns on suction of the holder 24B of the robot R1 and suctions and holds the selected second produce item LS conveyed on the second line L2.

In step S132, as an example, as shown in Fig. 11, the CPU 11 moves the holder 24C of the robot R1 above the selected third produce item LS conveyed on the second line L2 based on the priority and the coordinate data after coordinate transformation.

In step S133, the CPU 11 turns on suction of the holder 24C of the robot R1 and suctions and holds the selected third produce item LS conveyed on the second line L2.

In step S134, the CPU 11 determines whether or not the robot R1 has succeeded in holding plural produce items LS (three produce items LS here). When it is determined that holding of any of the plural produce items LS has failed (negative determination), the process proceeds to step S135, and when it is determined that holding of the plural produce items LS has succeeded (affirmative determination), the process proceeds to step S137.

In step S135, the CPU 11 moves, above another selected produce item LS conveyed on the second line L2, the holder 24 that has failed to hold the produce item LS among the holders 24A to 24C.

In step S136, the CPU 11 turns on suction of the holder 24 that has failed to hold the produce item LS, suctions and holds the other selected produce item LS conveyed on the second line L2, and proceeds to step S134.

In step S137, the CPU 11 acquires positions of the plural empty cans KN serving as loading targets. Here, the robot R1 and the plural empty cans KN serving as the loading targets are associated with each other in advance, and positions of the plural empty cans KN serving as the loading targets can be acquired as line information regarding the first line L1.

In step S138, the CPU 11 moves the plural holders 24A to 24C each holding the produce item LS above openings of the plural empty cans KN conveyed on the first line L1 based on the positions of the plural empty cans KN acquired in step S137.

In step S139, the CPU 11 moves the plural holders 24A to 24C in the same direction as the conveyance direction of the plural empty cans KN. That is, movement speeds of the plural holders 24A to 24C each holding the produce item LS are synchronized with conveyance speeds of the plural empty cans KN.

In step S140, the CPU 11 turns off suction of the holders 24A to 24C at a predetermined timing and loads (releases) the plural produce items LS into respective openings of the plural empty cans KN while moving the plural holders 24A to 24C in the same direction as the conveyance direction of the plural empty cans KN. Then, the CPU 11 moves the plural holders 24A to 24C of the robot R1 from the first line L1 to predetermined origin positions.

In step S141, the CPU 11 determines whether or not an end timing has arrived. When it is determined that the end timing has not arrived (negative determination), the process returns to step S121 and repeats the processing, and when it is determined that the end timing has arrived (affirmative determination), the series of processing by the control program 15A ends.

As described above, according to the embodiment, plural solid objects satisfying desired quality can be selected from non-uniform solid objects conveyed randomly and can be held in a row. The held plural solid objects can also be moved in synchronization with plural empty containers conveyed at high speed. Therefore, the solid objects held in a row can be efficiently loaded with high accuracy into openings of the plural empty containers.

In each embodiment described above, various processors other than the CPU may execute robot control processing executed when the CPU reads and executes software (a program). Examples of the processor in this case include a programmable logic device (PLD) whose circuit configuration can be changed after manufacturing, such as a field-programmable gate array (FPGA), and a dedicated electric circuit or the like, which is a processor having a circuit configuration specially designed to execute specific processing, such as an application specific integrated circuit (ASIC).

Further, an operation of the processor in each embodiment may be carried out not only by one processor, but also by plural processors physically located apart from each other in cooperation. An order of the respective operations of the processor is not limited only to the order described in each embodiment, and may be appropriately changed.

The system and the control device according to the embodiments have been exemplified and described above. The embodiments may also be in a form of a program for causing a computer to execute functions of the respective units included in the control device. The embodiments may also be in a form of a computer-readable non-transitory storage medium storing the programs.

In addition, a configuration of the control device described in the embodiments above is merely an example, and may be changed in accordance with circumstances within a range not departing from the gist.

A flow of processing of the program described in the embodiments is also merely an example, and unnecessary steps may be deleted, new steps may be added, or a processing order may be changed within a range not departing from the gist.

In the embodiments described above, a case in which processing according to the embodiments is implemented by a software configuration using a computer through execution of a program has been described, but the disclosure is not limited to this case. The embodiments may be implemented, for example, by a hardware configuration or by a combination of a hardware configuration and a software configuration.

In relation to the embodiments described above, the following supplementary notes are further disclosed.

### (Supplementary Note 1)

A beverage production system including:
a first line that conveys an empty container having an opening;
a second line that conveys a solid object having a projected area smaller than an area of the opening;
a loading device configured to hold the solid object conveyed on the second line one unit at a time and configured to perform an operation of loading the held solid object into the empty container through the opening; and
a control device that controls the loading device such that the solid object conveyed on the second line is loaded into the empty container conveyed on the first line.

### (Supplementary Note 2)

The beverage production system according to Supplementary Note 1, in which
the first line and the second line run side by side in the same direction.

### (Supplementary Note 3)

The beverage production system according to Supplementary Note 1 or 2, in which
the loading device includes a holder that detachably holds the solid object, and
the control device controls the loading device such that the solid object is loaded into the opening of the empty container while the holder holding the solid object is moved above the opening of the empty container and the holder is moved in the same direction as a conveyance direction of the empty container.

### (Supplementary Note 4)

The beverage production system according to Supplementary Note 3, in which
the control device controls the loading device such that the solid object is loaded into the opening of the empty container while a movement speed of the holder holding the solid object is synchronized with a conveyance speed of the empty container and the holder is moved in advance of the empty container to a downstream side in the conveyance direction.

### (Supplementary Note 5)

The beverage production system according to any one of Supplementary Notes 1 to 4, in which
the control device selects, as a solid object to be held, a solid object whose form satisfies a predetermined quality criterion among a plurality of the solid objects, from a captured image obtained by capturing the plurality of solid objects conveyed on the second line.

### (Supplementary Note 6)

The beverage production system according to Supplementary Note 5, in which
the predetermined quality criterion includes an index value representing a degree of circularity, and
the control device selects, from the captured image, a solid object for which the index value satisfies a certain condition.

### (Supplementary Note 7)

The beverage production system according to Supplementary Note 5, in which
the predetermined quality criterion includes an index value representing a degree of circularity and a color area representing an area of a color of a specific portion, and
the control device identifies, from the captured image, a plurality of solid objects for which the index value satisfies a certain condition and selects, among the identified plurality of solid objects, a solid object for which the color area is equal to or greater than a threshold.

### (Supplementary Note 8)

The beverage production system according to any one of Supplementary Notes 5 to 7, in which
the loading device includes a holder that detachably holds the solid object, and
the control device selects the number of solid objects greater than the number of the holders and controls the loading device such that, when the loading device fails to hold or load one selected solid object, another selected solid object is held.

### (Supplementary Note 9)

The beverage production system according to Supplementary Note 3, in which
the holder is a vacuum suction gripper.

### (Supplementary Note 10)

The beverage production system according to Supplementary Note 9, in which
the gripper is a Bernoulli gripper.

### (Supplementary Note 11)

The beverage production system according to any one of Supplementary Notes 1 to 10, in which
the solid object is formed in a sliced shape.

### (Supplementary Note 12)

The beverage production system according to any one of Supplementary Notes 1 to 11, in which
the solid object is a produce item.

### (Supplementary Note 13)

The beverage production system according to any one of Supplementary Notes 1 to 11, in which
the solid object is a wood chip.

### (Supplementary Note 14)

A control device of a beverage production system including
a first line that conveys an empty container having an opening,
a second line that conveys a solid object having a projected area smaller than an area of the opening,
a loading device configured to hold the solid object conveyed on the second line one unit at a time and configured to perform an operation of loading the held solid object into the empty container through the opening, and
a control device that controls operation of the loading device,
the control device controlling the loading device such that the solid object conveyed on the second line is loaded into the empty container conveyed on the first line.

### (Supplementary Note 15)

A control program for a beverage production system including
a first line that conveys an empty container having an opening,
a second line that conveys a solid object having a projected area smaller than an area of the opening,
a loading device configured to hold the solid object conveyed on the second line one unit at a time and configured to perform an operation of loading the held solid object into the empty container through the opening, and
a control device that controls operation of the loading device,
the control program causing a computer to execute control of the loading device such that the solid object conveyed on the second line is loaded into the empty container conveyed on the first line.

### (Supplementary Note 16)

A beverage production method using a beverage production system including
a first line that conveys an empty container having an opening,
a second line that conveys a solid object having a projected area smaller than an area of the opening,
a loading device configured to hold the solid object conveyed on the second line one unit at a time and configured to perform an operation of loading the held solid object into the empty container through the opening, and
a control device that controls operation of the loading device,
the beverage production method including
controlling the loading device such that the solid object conveyed on the second line is loaded into the empty container conveyed on the first line.

### (Supplementary Note 17)

The beverage production method according to Supplementary Note 16, in which
water activity of the solid object is 0.80 or lower.

The entire disclosures of Japanese Patent Application No. 2024-015159 filed on February 2, 2024 and Japanese Patent Application No. 2024-216937 filed on December 11, 2024 are incorporated into the present specification by reference. All documents, patent applications, and technical standards described in the present specification are incorporated herein by reference to the same extent as in a case in which incorporation by reference of each individual document, patent application, and technical standard is specifically and individually stated.

## Claims

1. A beverage production system comprising:
a first line that conveys an empty container having an opening;
a second line that conveys a solid object having a projected area smaller than an area of the opening;
a loading device configured to hold the solid object conveyed on the second line one unit at a time and configured to perform an operation of loading the held solid object into the empty container through the opening; and
a control device that controls the loading device such that the solid object conveyed on the second line is loaded into the empty container conveyed on the first line.

2. The beverage production system according to claim 1, wherein the first line and the second line run side by side in a same direction.

3. The beverage production system according to claim 1, wherein:
the loading device includes a holder that detachably holds the solid object, and
the control device controls the loading device such that the solid object is loaded into the opening of the empty container while the holder holding the solid object is moved above the opening of the empty container and the holder is moved in a same direction as a conveyance direction of the empty container.

4. The beverage production system according to claim 3, wherein the control device controls the loading device such that the solid object is loaded into the opening of the empty container, while a movement speed of the holder holding the solid object is synchronized with a conveyance speed of the empty container and the holder is moved in advance of the empty container to a downstream side in the conveyance direction.

5. The beverage production system according to claim 1, wherein the control device selects, as a solid object to be held, a solid object having a form that satisfies a predetermined quality criterion among a plurality of solid objects, from a captured image obtained by capturing the plurality of solid objects conveyed on the second line.

6. The beverage production system according to claim 5, wherein:
the predetermined quality criterion includes an index value representing a degree of circularity, and
the control device selects, from the captured image, a solid object for which the index value satisfies a certain condition.

7. The beverage production system according to claim 5, wherein:
the predetermined quality criterion includes an index value representing a degree of circularity and a color area representing an area of a color of a specific portion, and
the control device identifies, from the captured image, a plurality of solid objects for which the index value satisfies a certain condition and selects, among the identified plurality of solid objects, a solid object for which the color area is equal to or greater than a threshold.

8. The beverage production system according to claim 5, wherein:
the loading device includes a holder that detachably holds the solid object, and
the control device selects a number of solid objects greater than a number of holders and controls the loading device such that, when the loading device fails to hold or load one selected solid object, another selected solid object is held.

9. The beverage production system according to claim 3, wherein the holder is a vacuum suction gripper.

10. The beverage production system according to claim 9, wherein the gripper is a Bernoulli gripper.

11. The beverage production system according to claim 1, wherein the solid object is formed in a sliced shape.

12. The beverage production system according to claim 1, wherein the solid object is a produce item.

13. The beverage production system according to claim 1, wherein the solid object is a wood chip.

14. A control device of a beverage production system including:
a first line that conveys an empty container having an opening,
a second line that conveys a solid object having a projected area smaller than an area of the opening,
a loading device configured to hold the solid object conveyed on the second line one unit at a time and configured to perform an operation of loading the held solid object into the empty container through the opening, and
a control device that controls operation of the loading device,
the control device controlling the loading device such that the solid object conveyed on the second line is loaded into the empty container conveyed on the first line.

15. A control program for a beverage production system including:
a first line that conveys an empty container having an opening,
a second line that conveys a solid object having a projected area smaller than an area of the opening,
a loading device configured to hold the solid object conveyed on the second line one unit at a time and configured to perform an operation of loading the held solid object into the empty container through the opening, and
a control device that controls operation of the loading device,
the control program causing a computer to execute control of the loading device such that the solid object conveyed on the second line is loaded into the empty container conveyed on the first line.

16. A beverage production method using a beverage production system including:
a first line that conveys an empty container having an opening,
a second line that conveys a solid object having a projected area smaller than an area of the opening,
a loading device configured to hold the solid object conveyed on the second line one unit at a time and configured to perform an operation of loading the held solid object into the empty container through the opening, and
a control device that controls operation of the loading device,
the beverage production method comprising
controlling the loading device such that the solid object conveyed on the second line is loaded into the empty container conveyed on the first line.

17. The beverage production method according to claim 16, wherein water activity of the solid object is 0.80 or lower.
